# EUROPÄISCHE PATENTSCHRIFT

(11) **EP 0 847 187 B1**
(45) Veröffentlichungstag und Bekanntmachung des Hinweises auf die Patenterteilung: **18.12.2002**
(21) Anmeldenummer: 97117684.7
(22) Anmeldetag: 13.10.1997
(51) Int. Cl.: H04N 1/191

(54) **Abtastvorrichtung zur bildelementweisen fotoelektrischen Ausmessung eines Messobjekts**
Scanning apparatus for picture-element-wise photoelectric measurement of a measured object
Dispositif de balayage pour la mesure point d'image par point d'image photoélectrique d'un objet à mesurer

(30) Priorität: 04.12.1996 DE 19650223
(43) Veröffentlichungstag der Anmeldung: 10.06.1998
(73) Patentinhaber: Heidelberger Druckmaschinen Aktiengesellschaft, 69115 Heidelberg (DE)
(72) Erfinder: Ott, Hans, 8105 Regensdorf (CH); Rüegg, Kurt, 8307 Effretikon (CH)

(56) Entgegenhaltungen:
- US-A- 4 096 486
- US-A- 4 449 147

## Beschreibung

Die Erfindung betrifft eine Abtastvorrichtung zur bildelementweisen fotoelektrischen Ausmessung eines Messobjekts, insbesondere eines vorzugsweise mehrfarbig bedruckten Druckbogens, gemäss dem Oberbegriff des unabhängigen Anspruchs.

Abtastvorrichtungen dieser Art werden im allgemeinen als Scanner bezeichnet Eine erste bekannte Art von herkömmlichen Scannern weist einen einzelnen Messkopf auf, der in einer oder in zwei Dimensionen relativ zum Messobjekt bewegt werden kann. Im Falle einer eindimensionalen Beweglichkeit des Messkopfs ist das Messobjekt in der anderen Dimension beweglich. Der Messkopf tastet jeweils einen kleinen Bereich des Messobjekts, ein sog. Bildelement oder Pixel, fotoelektrisch ab, wobei jedes abzutastende Bildelement durch entsprechende Bewegung des Messkopfs oder des Messobjekts einzeln angefahren wird. Die Abtastung erfolgt im allgemeinen densitometrisch, es sind aber auch schon Scanner mit farbmetrischen oder spektralen Messköpfen bekannt. Ein wesentlicher Nachteil dieser bekannten Scanner ist in dem durch das einzelne Anfahren der zu messenden Bildelemente bedingten hohen Zeitaufwand für die vollständige Abtastung eines Druckbogens üblicher Grösse zu sehen, wodurch sie für den Einsatz zur automatischen Steuerung von modernen Druckmaschinen in der Regel ungeeignet sind.

Eine andere bekannte Art von Scannern, welche bisher ausschliesslich densitometrisch arbeitet, besitzt eine stillstehende linienförmige Anordnung von mehreren Messköpfen, welche die simultane oder sequentielle Abtastung einer ganzen Zeile von Bildelementen des Messobjekts erlauben. Zur Erfassung weiterer Bildelementzeilen wird das Messobjekt relativ zu der Messkopfanordnung bewegt. Solche Scanner werden u.a. an Druckmaschinen zur direkten Ausmessung der Druckbögen während des laufenden Drucks eingesetzt. Sie sind jedoch nicht zur vollautomatischen Abtastung der gesamten Bildfläche von stillstehenden Druckbögen geeignet.

In US 4,449,167 ist eine Abtastvorrichtung beschrieben, bei der mit einem schräg zur Abtastrichtung angeordneten Fotodiodenarray ein Dokument in hin- und hergehenden Betrieb abgetastet wird. Das Messlicht gelangt direkt auf die Fotodioden, wozu das Fotodiodenarray parallel und in geringem Abstand zum Dokument angeordnet ist. Durch die vorliegende Erfindung soll eine Abtastvorrichtung der gattungsgemässen Art dahingehend verbessert werden, dass eine vollautomatische Abtastung der gesamten Bildfläche eines stillstehenden Messobjekts bei ausreichender Auflösung und insbesondere auch bei spektraler Abtastung mit vertretbarem konstruktiven Aufwand in sehr kurzer Zeit möglich ist. Eine zusätzliche Aufgabe der Erfindung besteht in der Schaffung der Voraussetzungen für eine kontinuierliche Abtastung nach einem orthogonalem Abtastmuster. Eine weitere Aufgabe der Erfindung besteht in der Erzielung einer ausreichend hohen Auflösung bei möglichst niedrigem konstruktiven Aufwand. Des weiteren soll durch die Erfindung eine konstruktiv einfache und das zur Verfügung stehende Messlicht optimal ausnützende Lösung für eine gleichzeitige Messung der im sichtbaren Bereich liegenden Spektralanteile und des IR-Anteils des Messlichts geschaffen werden.

Diese der Erfindung zugrundeliegenden Aufgaben werden durch die erfindungsgemässe Abtastvorrichtung gelöst, wie sie im unabhängigen und den abhängigen Ansprüchen definiert ist.

Einzelheiten und Vorteile der erfindungsgemässen Abtastvorrichtung ergeben sich aus der nachstehenden Beschreibung eines Ausführungsbeispiels in Verbindung mit der Zeichnung. In dieser zeigen:
- Fig. 1: eine vereinfachte Gesamtansicht eines Ausführungsbeispiels einer Abtastvorrichtung
- Fig. 2: eine Prinzipskizze der Messkopfanordnung der Abtastvorrichtung,
- Fig. 3: einen Schnitt nach der in Fig. 2 durch die Linien III-III angedeuteten Ebene durch einen Messkopf der Messkopfanordnung,
- Fig. 4: einen Schnitt nach der in Fig. 1 durch die Linien IV-IV angedeuteten Ebene durch den Messwagen der Abtastvorrichtung,
- Fig. 5: eine schematische Darstellung der Abtastvorrichtung,
- Fig. 6: eine vereinfachte Unteransicht der Messkopfanordnung und
- Fig. 7: eine Skizze zur Erläuterung des Abtastvorgangs und der Bewegungen der Messkopfanordnung während des Abtastvorgangs.

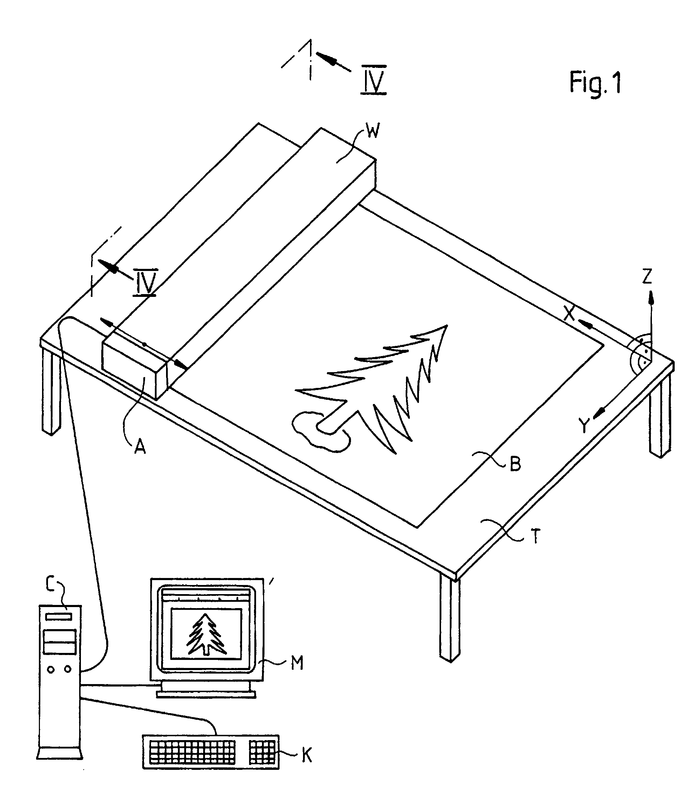

Die in Fig. 1 gezeigte Abtastvorrichtung entspricht in ihrem generellen Aufbau den üblichen Messapparaturen, wie sie z.B. in der grafischen Industrie typischerweise zur punktweisen fotoelektrischen Ausmessung von dem Druckprozess entnommenen Druckbögen verwendet werden. Die Abtastvorrichtung umfasst einen Unterbau in Form eines etwas geneigten rechteckigen Messtischs T, auf dem der auszumessende Druckbogen - das Messobjekt B - positioniert werden kann. Zur Positionierung des Messobjekts sind nicht dargestellte Anschläge vorgesehen. Die Fixierung des Messobjekts B auf dem Messtisch T erfolgt vorzugsweise auf elektrostatischem Wege oder mittels bekannter Saugmechanismen. Auf dem Messtisch T ist ein Messwagen W angeordnet, auf bzw. in dem sich die eigentliche Abtasteinrichtung (hier nicht dargestellt) befindet. Der Messwagen W erstreckt sich über die Tiefe des Messtischs in Koordinatenrichtung y und ist motorisch über dessen Breite in Koordinatenrichtung x linear hin und her beweglich, wobei entsprechende Antriebs- und Steuereinrichtungen im Messwagen W und am bzw. unter dem Messtisch T vorgesehen sind. Die Antriebseinrichtung ist in der Zeichnung nur symbolisch durch das Bezugszeichen A angedeutet. Die Abtastvorrichtung umfasst ferner noch eine Verarbeitungseinrichtung in Form eines Rechners C mit Tastatur K und Farbmonitor M. Der Rechner C arbeitet mit der Steuereinrichtung am Messtisch T bzw. im Messwagen W zusammen und verarbeitet die von der auf dem Messwagen W befindlichen Abtasteinrichtung erzeugten Meßsignale.

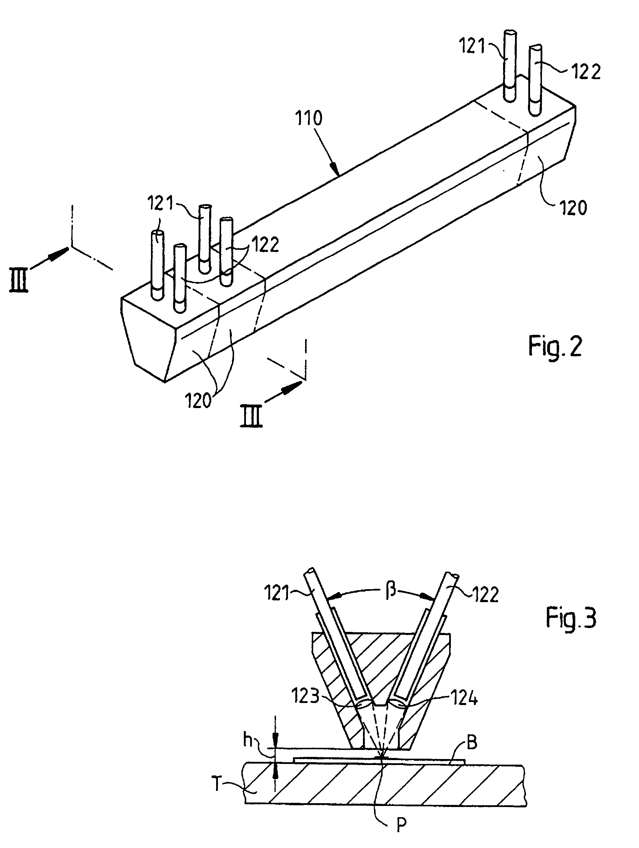

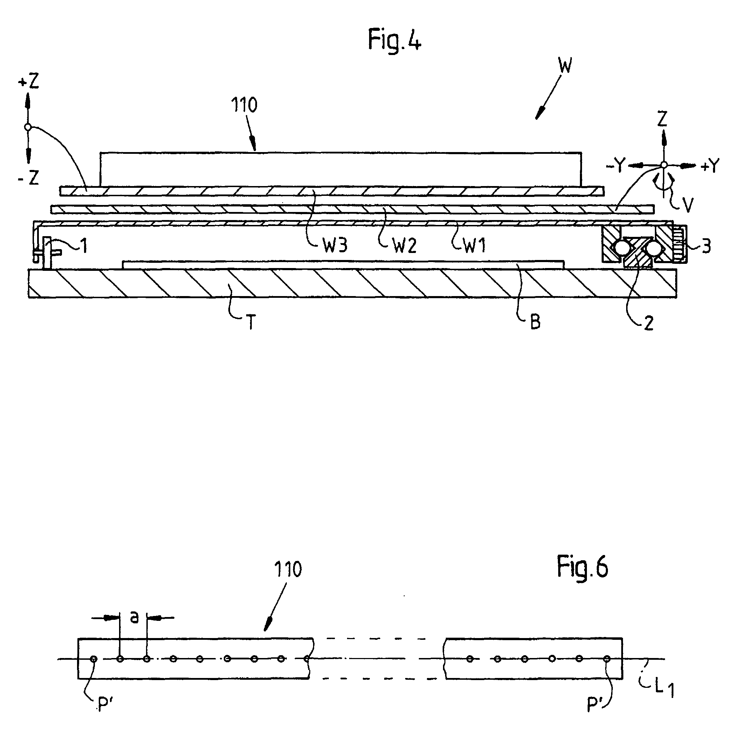

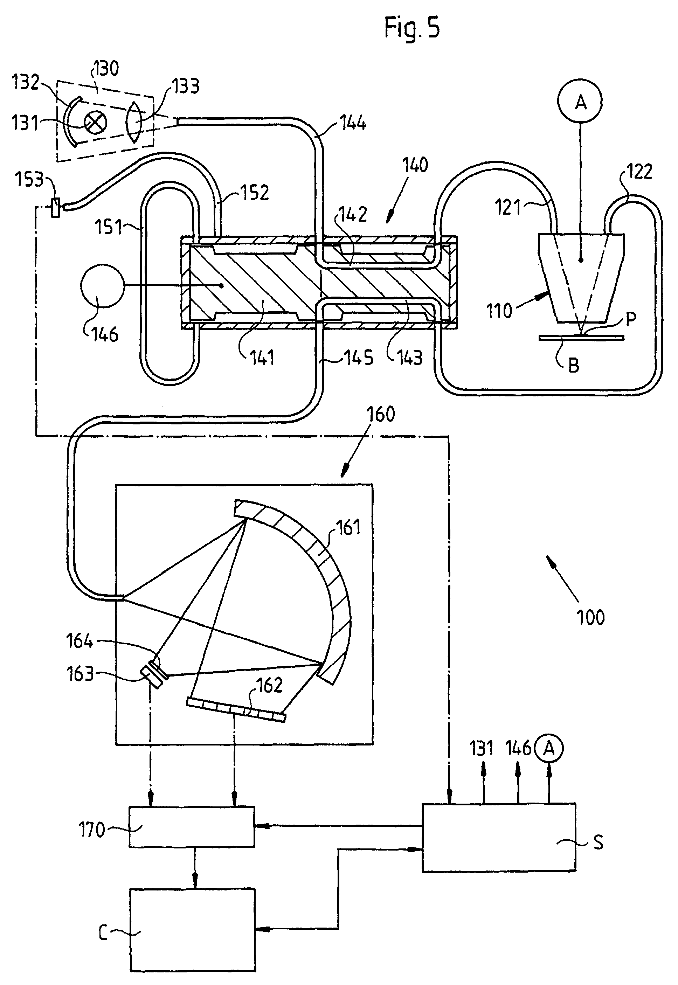

Der Messwagen W enthält die weiter unten noch im Detail erläuterte eigentliche Abtasteinrichtung 100, welche gemäss Fig. 2 und 5 im wesentlichen eine etwa balkenförmige Messkopfanordnung 110 mit einer Vielzahl von Messköpfen 120, eine Lichtquelle 130, einen Lichtverteiler 140 und eine Empfängereinheit 160 umfasst. Wie aus Fig. 4 erkennbar, umfasst der Messwagens W im wesentlichen drei etwa wannenförmige Trägerelemente W1, W2 und W3, welche an- bzw. aufeinander montiert und relativ zueinander beweglich angeordnet sind. Die Messkopfanordnung 110 ist auf dem dritten, obersten Trägerelement W3 montiert, alle übrigen Komponenten der Abtasteinrichtung befinden sich auf dem ersten, untersten Trägerelement W1, was in Fig. 4 nicht näher dargestellt ist. Das erste, unterste Trägerelement W1 ist in einer Ebene parallel zum Messtisch T linear quer über die Breite des Messtischs T hin und zurück beweglich angeordnet. Das erste Trägerelement W1 kann sich also in Richtung der x-Achse (Fig. 1) bewegen, wobei diese Richtung unabhängig von ihrem Vorzeichen im folgenden als zweite Richtung x bezeichnet wird. Das zweite Trägerelement W2 ist auf dem ersten Trägerelement W1 montiert und relativ zu diesem einerseits in einer Ebene parallel zum Messtisch T in Richtung der y-Achse parallelversetzbar und andererseits um die zur Ebene des Messtischs senkrechte z-Achse (vgl. auch Fig. 1) zwischen zwei Winkelstellungen in der Schwenkbewegungsrichtung v verschwenkbar. Die y-Bewegungsrichtung des zweiten Trägerelements wird im folgenden unabhängig vom Vorzeichen als erste Richtung y bezeichnet. Das dritte Trägerelement W3 schliesslich ist auf dem zweiten Trägerelement W2 montiert und relativ zu diesem in Richtung der z-Achse, also bezüglich seiner Höhe gegenüber der Oberfläche des Messtischs T verstellbar. Wie aus Fig. 4 weiter erkennbar, ist das erste Trägerelement W1 und damit der gesamte Messwagen W an seinem unteren Ende auf Rollen 1 gelagert und an seinem oberen Ende in einer auf dem Messtisch T montierten Schiene 2 geführt und an einem motorisch angetriebenen Transportriemen 3 befestigt, welcher das erste Trägerelement W1 und damit den gesamten Messwagen W quer über den Messtisch hin und her zieht. Der Transportriemen 3 ist Teil der Antriebseinrichtung A.

Die balkenförmige Messkopfanordnung 110 ist parallel zur Längserstreckung des Messwagens W ausgerichtet und besitzt durch ihre Anordnung auf dem dritten, obersten Trägerelement W3 des Messwagens W vier Freiheitsgrade der Bewegung: Linearbewegung zwischen einer Anfangs- und einer Endstellung vorwärts und zurück in der zweiten Richtung (x-Achse). Linear-Parallelversetzung aufwärts und abwärts in der ersten Richtung (y-Achse), Höhenverstellung bezüglich des Messtischs T (z-Koordinate, Höhe h) und Verschwenkbarkeit um die z-Achse zwischen einer ersten und einer zweiten Winkelstellung (Schwenkrichtung v). Die Bewegung der Messkopfanordnung 110 entsprechend ihren vier Freiheitsgraden erfolgt durch die schon genannte Antriebseinrichtung A in Zusammenarbeit mit der Steuereinrichtung S (Fig. 5), welche ihrerseits übergeordnete Steuerbefehle vom Rechner C erhält.

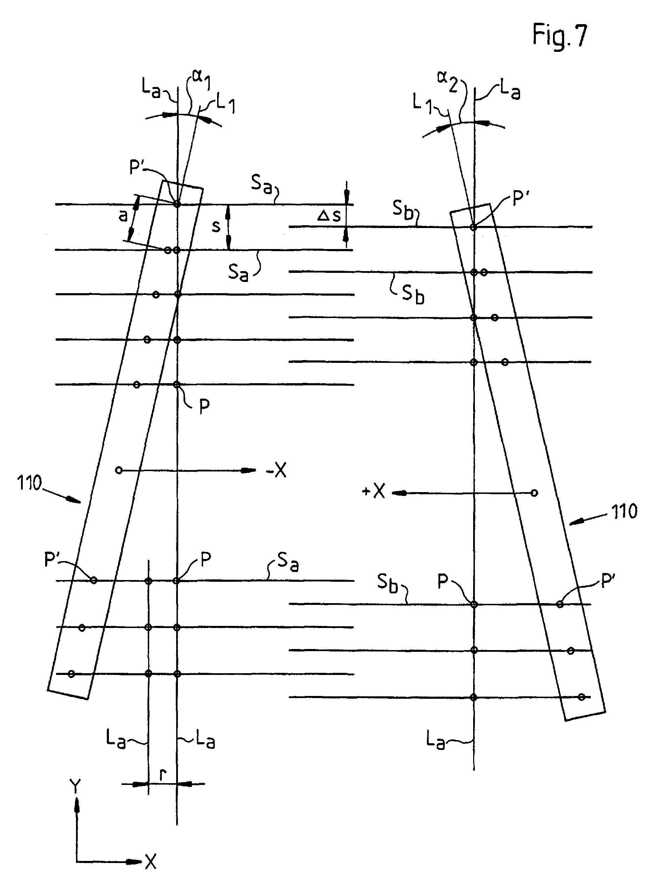

Die balkenförmige Messkopfanordnung 110 ist auf dem Messwagen W in geringem Abstand über dem Messobjekt B angeordnet und besteht aus einer Vielzahl n (typischerweise 160) von zu einem balkenförmigen Block zusammengefassten Messköpfen 120, die jeweils einen zuführenden Lichtleiter 121 und einen abführenden Lichtleiter 122 aufweisen, welche so angeordnet sind, dass sie das Messobjekt B je in eng begrenzten Bereichen von etwa 2-3 mm Durchmesser mit Beleuchtungslicht beaufschlagen bzw. aus diesen Bereichen zurückgestrahltes Messlicht abführen (Fig. 2 und 3). Die Anordnung ist dabei so getroffen, dass das remittierte Messlicht unter einem Winkel β von etwa 45° zur Beaufschlagungsrichtung aufgefangen wird. In den einzelnen Messköpfen 120 sind optische Elemente 123 und 124 vorgesehen, welche das von den zuführenden Lichtleitern 121 zugeführte Beleuchtungslicht in geeigneter Weise auf die Bereiche fokussieren und das von diesen remittierte Licht in die abführenden Lichtleiter 122 einkoppeln. Diese optischen Elemente 123 und 124 können herkömmliche optische Linsen oder Gradientenindexelemente sein. Die von den Messköpfen 120 erfassten Bereiche des Messobjekts B werden im folgenden als Bildelemente bzw. Pixel P des Messobjekts B bezeichnet. Die Projektionen dieser Pixel P in Richtung der z-Achse auf die Messkopfanordnung 110 bzw. die Messköpfe 120, also die Messpositionen bezogen auf die Messkopfanordnung, werden als P' bezeichnet. Die Anordnung der Messköpfe 120 ist so, dass die Messpositionen P' in einer geraden Linie L₁ und in gleichmässigen Abständen a zueinander liegen (Fig. 6).

Die zuführenden und abführenden Lichtleiter 121 bzw. 122 der Messköpfe 120 sind mit dem im wesentlichen trommelförmig ausgebildeten Lichtverteiler 140 verbunden und münden gleichabständig längs zweier Kreislinien in dessen Stirnseiten. Wie in der Fig. 5 gezeigt, münden die Lichtleiter 121 bzw. 122 der übersichtlicheren Darstellung wegen an den gegenüberliegenden Stirnseiten in den Lichtverteiler 140. In der Praxis liegen die Mündungen der Lichtleiter 121, 122 auf der selben Stirnseite längs zweier konzentrischer Kreislinien. Im Inneren des Lichtverteilers 140 befindet sich ein mittels eines Motors 146 gleichförmig angetriebener Rotor 141, welcher zwei Lichtleiterbrücken 142 und 143 enthält, von denen die eine 142 während ihres Umlaufs einen axial einmündenden Lichtzufuhrleiter 144 nacheinander mit den zuführenden Lichtleitern 121 und die andere 143 einen ebenfalls axial einmündenden Lichtabführleiter 145 nacheinander mit den abführenden Lichtleitern 122 optisch verbindet, wobei die einzelnen Verbindungen zyklisch wiederholt hergestellt werden und jeweils die zum selben Messkopf 120 gehörenden zuführenden und abführenden Lichtleiter 121 bzw. 122 gleichzeitig mit dem Lichtzufuhrleiter 144 bzw. dem Lichtabführleiter 145 verbunden sind. Ausserdem sind die Lichtleiter 121 und 122 so angeordnet, dass die einzelnen Messköpfe 120 der Messkopfanordnung 110 jeweils sequentiell, d.h. der Reihe nach zyklisch aktiviert werden.

Der Lichtzufuhrleiter 144 ist mit der Lichtquelle 130 verbunden. Diese umfasst eine Xenon-Lampe 131, eventuell einen Hohlspiegel 132 und ein Linsensystem 133, welches das von der Lampe 131 ausgehende Beleuchtungslicht in den Lichtleiter 144 einkoppelt. Mittels des Lichtverteilers 140 werden die einzelnen Messköpfe 120 zyklisch sequentiell mit der Lichtquelle 130 verbunden, wobei jeder Messkopf 120 jeweils das gesamte zur Verfügung stehende Beleuchtungslicht erhält, also keine intensitätsmässige Aufsplittung des Beleuchtungslichts auf die einzelnen Messköpfe 120 erfolgt. Auf diese Weise kann die Leistung der Lichtquelle 130 relativ gering gehalten werden.

Der Lichtabführleiter 145 ist mit der Empfängereinheit 160 verbunden, so dass auch diese über den Lichtverteiler 140 zyklisch sequentiell mit den einzelnen Messköpfen 120 verbunden wird. Die Empfängereinheit 160 ist als Spektralphotometer ausgebildet und umfasst als dispersives Element ein konkaves holografisches Reflexions-Beugungsgitter 161 sowie eine fotoelektrische Wandlerzeile 162 z.B. in Form eines linearen CCD-Felds oder Fotodioden-Felds als Messwandler. Die Wandlerzeile 162 ist im Bereich der vom dispersiven Element 161 erzeugten Interferenzmaxima erster Ordnung angeordnet, wobei die einzelnen Wandlerelemente der Wandlerzeile jeweils nur von einem relativ schmalen Spektralbereich, z. B. 10-20 nm, des sichtbaren Anteils des Messlichts beaufschlagt werden.

Ferner umfasst die Empfängereinheit 160 noch einen zusätzlichen Lichtempfänger 163, welcher im Unterschied zur Wandlerzeile 162 nicht im Bereich der Beugungsmaxima erster Ordnung, sondern im Bereich der Beugungsmaxima nullter Ordnung angeordnet und z.B. mittels eines vorgeschalteten Filters 164 auf einen ausgewählten Wellenlängenbereich im Bereich des Infrarot-Anteils des Messlichts sensibilisiert ist. Durch den zusätzlichen Lichtempfänger 163 und seine spezielle Anordnung im Bereich der Beugungsmaxima nullter Ordnung wird der konstruktive Aufwand für eine Messung sowohl im sichtbaren als auch im IR-Bereich des Spektrums niedrig gehalten und gleichzeitig das Messlicht optimal ausgenützt.

Der Wandlerzeile 162 und dem zusätzlichen Lichtempfänger 163 ist ein Verstärker und A/D-Wandler 170 nachgeschaltet, welcher die von der Wandlerzeile 162 und dem zusätzlichen Lichtempfänger 163 erzeugten, dem remittierten Messlicht entsprechenden Meßsignale in eine von der nachgeschalteten Verarbeitungseinrichtung, hier in Form des Rechners C, verarbeitbare Form bringt. Die von der Wandlerzeile 162 erzeugten, die sichtbaren Spektralanteile des Messlichts repräsentierenden Meßsignale werden im folgenden als Spektral-Meßsignale, die vom IR-Lichtempfänger 163 erzeugten, den Infrarot-Anteil des Messlichts repräsentierenden Meßsignale als IR-Meßsignale bezeichnet.

Der Lichtverteiler 140 weist gemäss einer weiteren vorteilhaften Ausgestaltung der Erfindung eine um 3 grössere Anzahl von Ein- und Ausgängen auf als die Anzahl n von Messköpfen 120 bzw. diesen zugeordneten zuführenden und abführenden Lichtleitem 121 bzw. 122. Einer dieser zusätzlichen Eingänge ist mittels eines Eichlichtleiters 151 direkt, d.h. also ohne den Umweg über einen Messkopf 120, mit dem zugeordneten Ausgang verbunden, so dass in der entsprechenden Stellung des Rotors 141 die Lichtquelle 130 pro Umlauf einmal direkt mit der Empfängereinheit 160 verbunden ist. Die dabei erzeigten Meßsignale können von der Steuereinrichtung S bzw. der Verarbeitungseinrichtung C zur Kalibrierung der Abtasteinrichtung 100 ausgewertet werden. An den anderen Eingang des Lichtverteilers 140 ist ein Synchronisierlichtleiter 152 angeschlossen, welcher zu einem weiteren Lichtsensor 153 führt, der an die Steuereinrichtung S angeschlossen ist. Der Lichtsensor 153 wird pro Umlauf des Rotors 141 einmal direkt mit der Lichtquelle 130 verbunden. Das dabei erzeugte Signal kann von der Steuereinrichtung S bzw. der Verarbeitungseinrichtung C zur Synchronisation der Abtasteinrichtung 100 ausgewertet werden. Ein dritter Ausgang ist einem unbeschalteten (also nicht mit Licht beaufschlagten) Eingang zugeordnet und dient zur Dunkelkalibration des Meßsystems.

Die Funktionsweise der vorstehend beschriebenen Abtastvorrichtung wird nachstehend erläutert. Dabei wird davon ausgegangen, dass alle Funktionsabläufe vom Rechner C in Verbindung mit der Steuereinrichtung S kontrolliert werden.

Zunächst wird die Abtasteinrichtung 100 an die Dicke des Messobjekts B angepasst. Dazu wird der Messwagen W soweit über das Messobjekt B gefahren, dass die Messköpfe 120 in den Randbereich des Messobjekts B zu liegen kommen. Nun erfolgt bei stillstehendem Messwagen W eine erste Abtastung des Messobjekts B bei verschiedenen Höhen h der Messköpfe 120 über dem Messtisch T. Die Höhe h wird solange verstellt, bis die erzeugten Meßsignale ihren Maximalwert erreichen. Die dabei gefundene Höheneinstellung h wird gespeichert und bis zur Abtastung eines anderen Messobjekts B beibehalten. Die automatische Höhenanpassung erfolgt durch eine Höhenverstellvorrichtung, welche durch die Antriebseinrichtung A in Verbindung mit der Steuereinrichtung S und dem Rechner C gebildet ist.

Nun erfolgt die eigentliche pixelweise Abtastung des Messobjekts B in zwei Durchläufen, und zwar einmal während der Vorwärtsbewegung des Messwagens W von der Anfangsstellung links des Messobjekts B in die Endstellung rechts des Messobjekts B und einmal während der Rückwärtsbewegung des Messwagens W zurück in seine Anfangsstellung.

Wie die Fig. 7 zeigt, erfolgt die bildelementweise Abtastung dabei in zwei Dimensionen: Durch die sequentielle Aktivierung der hintereinander längs einer Linie L₁ angeordneten Messköpfe 120 erfolgt die Abtastung längs Abtastlinien Lₐ, die im wesentlichen parallel zur ersten Richtung y verlaufen. Durch die lineare Bewegung des Messwagens W und damit der Messköpfe 120 in der zweiten Richtung x tastet jeder Messkopf 120 das Messobjekt B entlang einer ersten bzw. zweiten Abtastspur Sₐ, bzw. S_{b} ab, welche parallel zur Bewegungsrichtung (zweite Richtung x) des Messwagens W liegt. Die Abtastlinien Lₐ und die ersten und zweiten Abtastspuren Sₐ und S_{b} bilden also ein gitterförmiges Abtastmuster, an dessen Kreuzungspunkten die abgetasteten Bildelemente P liegen. Die Aufteilung der Bildfläche in einzelne Bildelemente P ist durch die Abstände der Messköpfe 120 und durch deren zeitlich sequentielle Aktivierung gegeben. Die Abstände s der einzelnen Spuren Sₐ bzw. S_{b} sind durch die Abstände a der Messköpfe 120 festgelegt. Die Abstände r zwischen zwei aufeinanderfolgenden Abtastlinien Lₐ ergeben sich aus der Zyklusdauer t, die der Rotor des Lichtverteilers 140 für einen vollständigen Umlauf benötigt, und aus der Vorschubgeschwindigkeit u des Messwagens W in Richtung x. Die durch die Anordnung der Messköpfe 120 gegebenen Messpositionen an der Messkopfanordnung 110 sind mit P' bezeichnet.

Wenn die Messköpfe 120 längs einer zur ersten Richtung y parallelen Linie angeordnet wären, so würden sich aufgrund der Vorschubbewegung des Messwagens W während der Abtastung zur ersten Richtung y geneigte Abtastlinien Lₐ ergeben, das Abtastmuster würde also nicht orthogonal sein. Dies würde die Auswertung der Meßsignale wesentlich erschweren. Ein orthogonales Abtastmuster liesse sich theoretisch durch Anhalten des Messwagens W während der Abtastung entlang einer Abtastlinie erreichen, jedoch ist dies in der Praxis aus verschiedenen Gründen nicht zweckmässig; insbesondere würde der gesamte Abtastvorgang auf diese Weise unerwünscht viel Zeit in Anspruch nehmen. Ausserdem ist das schrittweise Bewegen des Messwagens W mechanisch ungünstig. Um trotzdem auch bei kontinuierlich bewegtem Messwagen W ein orthogonales Abtastmuster zu erreichen, wird die Messkopfanordnung 110 während des Vorschubs um einen Vorhaltewinkel α₁ bzw. α₂ zur ersten Richtung x schräg gestellt. Diese Schrägstellung erfolgt durch Verschwenken des zweiten Trägerelements W2 um eine zur z-Achse parallele Schwenkachse, welche durch die Messposition P' des ersten während eines Abtastzyklus aktivierten Messkopfs 120 der Messkopfanordnung 110 verläuft. Der Vorhaltewinkel α₁ bzw. α₂ ist so gewählt, dass sich die Messposition P' des letzten während eines Abtastzyklus aktivierten Messkopfs 120 zum Zeitpunkt der Aktivierung des betreffenden Messkopfs 120 genau auf der Abtastlinie Lₐ befindet, auf der sich der erste Messkopf 120 während desselben Abtastzyklus zum Zeitpunkt seiner Aktivierung befunden hatte. Während des Rücklaufs des Messwagens W ist die Schrägstellung der Messkopfanordnung 110 spiegelbildlich zur ersten Richtung x, welche die Richtung der Abtastlinien Lₐ festlegt. Die beiden Vorhaltewinkel α₁ und α₂ sind also gleich gross, haben aber entgegengesetzte Vorzeichen.

Die erreichbare Auflösung in Richtung y hängt von der Anzahl Messköpfe 120 ab. Um bei einer aufwandmässig vertretbaren Anzahl von Messköpfen 120 eine für die Praxis geeignete Auflösung der Abtastung zu erreichen, wird gemäss einem weiteren wesentlichen Aspekt der Erfindung die Messkopfanordnung 110 beim Rücklauf des Messwagens W in der ersten Richtung um eine kleine Distanz Δs so parallelversetzt, dass die beim Rücklauf erzeugten Abtastspuren S_{b} genau in die Mitte zwischen den Abtastspuren Sₐ des Hinlaufs zu liegen kommen. Wenn mehrere Hin- und Rückläufe in Kauf genommen werden können, so kann durch entsprechendes Versetzen der Messkopfanordnung 110 bei jedem einzelnen Lauf um Bruchteile des normalen Spurabstands s die Auflösung noch wesentlich gesteigert werden.

Die Vorhaltewinkel α₁ und α₂ sind mit der gewünschten Auflösung ax in der zweiten Richtung x, der Anzahl n und den Abständen a der Messköpfe 120, der Totalanzahl k*n Abtastspuren, der Zykluszeit t des Lichtverteilers 140, der Anzahl m zusätzlicher, nicht mit den Messköpfen 120 verbundenen Positionen des Lichtverteilers 140 und der Vorschubgeschwindigkeit u der Messkopfanordnung 110 in der zweiten Richtung x verknüpft. Unter Zugrundelegung eines quadratischen Abtastmusters, wobei die Auflösung ax in Richtung x und die Auflösung ay in Richtung y je etwa 2.5 mm betragen, und mit einem einzigen Hin- und Rücklauf des Messwagens W, wobei die Totalanzahl k*n der Abtastspuren 5a, 5b gleich der doppelten Anzahl der Messköpfe 120 ist, ergibt sich für die Vorhaltewinkel α₁ und α₂ ein Wert von ca. 0,15°.

Die beschriebene erfindungsgemässe Abtastvorrichtung 100 ermöglicht bei vertretbarem konstruktiven Aufwand eine rasche und effiziente bildelementweise farbmetrische Ausmessung von farbigen Druckbögen B mit ausreichender Auflösung über die gesamte Oberfläche der Druckbögen B, also die sog. Messung im Bild im Unterschied zur linearen Messung an mitgedruckten Farbkontrollstreifen. Die dabei gewonnenen Messdaten können nach verschiedenen Kriterien zur automatischen Regelung des Druckprozesses verarbeitet werden.

## Patentansprüche

1. Abtastvorrichtung zur bildelementweisen fotoelektrischen Ausmessung eines Messobjekts, insbesondere eines vorzugsweise mehrfarbig bedruckten Druckbogens, mit einem Messtisch (T), auf welchem das Messobjekt (B) für die Ausmessung befestigbar ist,
mit einer über die Oberfläche des Messtischs (T) bewegbaren Abtasteinrichtung (100), welche jeweils wenigstens ein Bildelement (P) des Messobjekts (B) fotoelektrisch abtastet,
wobei die Abtasteinrichtung (100) eine Vielzahl von Messköpfen (120) zur bildelementweisen Ausmessung einer entsprechenden Vielzahl von in einer ersten Richtung (y) im wesentlichen in Reihe hintereinander liegenden Bildelementen (P) des Messobjekts (B) umfasst,
und wobei die Messköpfe (120) in einer zu dieser ersten Richtung (y) im wesentlichen quer verlaufenden zweiten Richtung (x) gemeinsam bewegbar angeordnet sind, so dass das Messobjekt (B) in einer Vielzahl von zur zweiten Richtung (x) parallelen ersten Abtastspuren (Sₐ) abtastbar ist,
mit einer Antriebseinrichtung (A), welche die Abtasteinrichtung (100) über den Messtisch (T) bewegt, so dass sämtliche Bildelemente (P) des Messobjekts (B) erfassbar sind,
mit einer Steuereinrichtung (S) für die Abtasteinrichtung (100) und die Antriebseinrichtung (A),
und mit einer Verarbeitungseinrichtung (C), um die von der Abtasteinrichtung (100) erzeugten Messsignale aus den abgetasteten Bildelementen (P) dess Messobjekts (B) aufzubereiten und auszuwerten,
**dadurch gekennzeichnet,**
**dass** die Messköpfe (120) je einen Beleuchtungslicht zum Messobjekt (B) zuführenden Lichtleiter (121) und einen vom Messobjekt (B) zurückgestrahltes Messlicht abführenden Lichtleiter (122) aufweisen, und dass die Abtasteinrichtung (100) eine Lichtquelle (130), eine Empfängereinheit (160) und einen Lichtverteiler (140) aufweist, welcher jeweils den zuführenden Lichtleiter (121) und den abführenden Lichtleiter (122) der einzelnen Messköpfe (120) zyklisch sequentiell mit der Lichtquelle (130) und der Emfängereinheit (160) verbindet.

2. Vorrichtung nach Anspruch 1,
**dadurch gekennzeichnet,**
**dass** der Lichtverteiler (140) zwei synchron rotierende Lichtleiterbrücken (142, 143) aufweist, welche je einen axialen angeordneten Lichtleiter (144, 145) zyklisch sequentiell mit einer Vielzahl von peripher angeordneten Lichtleitern (121, 122) optisch verbinden.

3. Vorrichtung nach einem der Ansprüche 1-2,
**dadurch gekennzeichnet,**
**dass** die Empfängereinheit (160) als Spektralfotometer ausgebildet ist, welches das ihm von den Messköpfen (120) aus den abgetasteten Bildelementen (P) des Messobjekts (B) zugeführte Messlicht in eine vorgegebene Anzahl von schmalbandigen Spektralbereichen im Bereich des sichtbaren Spektrums zerlegt und in korrespondierende elektrische Spektral-Messsignale umwandelt.

4. Vorrichtung nach Anspruch 2,
**dadurch gekennzeichnet,**
**dass** die Empfängereinheit (160) zusätzlich einen Lichtempfänger (163) zur selektiven Erfassung wenigstens eines Teilbereichs des Infrarot-Anteils des Messlichts und zur Erzeugung eines korrespondierenden elektrischen IR-Messsignals aufweist.

5. Vorrichtung nach Anspruch 4,
**dadurch gekennzeichnet,**
**dass** die Emfängereinheit (160) ein konkaves Reflexions-Beugungsgitter (161) als dispersives Element sowie eine im Bereich der von diesem erzeugten Interferenzmaxima erster Ordnung angeordnete fotoelektrische Wandlerzeile (162) aufweist, und dass der Lichtempfänger (163) für den IR-Anteil des Messlichts im Bereich des Interferenzmaximums nullter Ordnung des Beugungsgitters (161) angeordnet ist.

6. Vorrichtung nach einem der Ansprüche 1-5,
**dadurch gekennzeichnet,**
**dass** die Abtasteinrichtung (100) einen in der genannten zweiten Richtung (x) über den Messtisch (T) bewegbaren Messwagen (W) umfasst, an dem die Messköpfe (120) montiert sind und welcher auch die Lichtquelle (130), den Lichtverteiler (140) und die Empfängereinheit (160) trägt

7. Vorrichtung nach einem der Ansprüche 1-6,
**dadurch gekennzeichnet,**
**dass** der Lichtverteiler (140) pro Umlaufzyklus wenigstens einmal die Lichtquelle (130) direkt mit der Empfängereinheit (160) verbindet und dass die Steuereinrichtung (S) oder die Verarbeitungseinrichtung (C) die dabei von der Empfängereinheit (160) erzeugten Messsignale zur Kalibrierung der Abtasteinrichtung (100) auswertet

8. Vorrichtung nach einem der Ansprüche 1-7,
**dadurch gekennzeichnet,**
**dass** ein zusätzlicher Lichtsensor (153) vorgesehen ist, dass der Lichtverteiler (140) pro Umlaufzyklus wenigstens einmal die Lichtquelle (130) mit dem zusätzlichen Lichtsensor (153) verbindet und dass die Steuereinrichtung (S) oder die Verarbeitungseinrichtung (C) die vom zusätzlichen Lichtsensor (153) erzeugten Messsignale zur Synchronisation der Abtasteinrichtung (100) auswertet.

9. Vorrichtung nach einem der Ansprüche 1-8,
**dadurch gekennzeichnet,**
**dass** der Lichtverteiler (140) eine Messposition für die Dunkelkalibrierung des Messsystems aufweist.

## Claims

1. Scanning device for pixel-by-pixel photoelectric measurement of a measured object, particularly a printed sheet preferably printed in multiple colors, with a measuring table (T) on which the measured object (B) can be fixed for measurement,
with a scanning device (100) which can be moved over the surface of the measuring table (T) which photoelectrically scans at least one pixel (P) of the measured object (B),
whereby the scanning device (100) comprises a multiplicity of measuring heads (120) for pixel-by-pixel measurement of a corresponding plurality of pixels (P) of the measured object (B) lying substantially in a row one behind the other in a first direction (y)
and whereby the measuring heads (120) are arranged such that they can be collectively moved in a second direction (x) which extends substantially transversely to this first direction (y) such that the measured object (B) can be scanned in a plurality of first scanning tracks (Sₐ) parallel to the second direction (x)
with a drive unit (A) that moves scanning device (100) over the measuring Table (T) such that all pixels (P) of the measured object (B) can be measured,
with a control unit (S) for scanning the device (100) and the drive unit (A),
and with a processing unit (C) for processing and analyzing the measuring signals generated by the scanning device (100) from the scanned pixels (P) of the measured object (B),
**characterized in**
**that** the measuring heads (120) each have a light guide (121) supplying an illuminating light to the measured object (B) and a light guide (122) removing the measuring light reflected by the measured object (B) and that the scanning device (100) has a light source (130), a receiver unit (160) and a light distribution unit (140), which light distribution unit (140) cyclically sequentially connects, respectively, the incoming light guide (121) and the outgoing light guide (122) of the individual measuring heads (120) with the light source (130) and the receiver unit (160).

2. Device according to claim 1,
**characterized in**
**that** the light distribution unit (140) has two synchronously rotating light guide bridges (142, 143) which each optically connect an axially disposed light guide (144, 145) in cyclical sequential manner with a plurality of peripherally disposed light guides (121, 122).

3. Device according to one of claims 1-2,
**characterized in**
**that** the receiver unit (160) is embodied as a spectrophotometer which separates the measured light supplied to it by the measuring heads (120) from the scanned pixels (P) of the measured object (B) into a predetermined number of narrow band spectral regions in the range of the visible spectrum and converts them to corresponding electrical spectral measuring signals.

4. Device according to claim 2,
**characterized in**
**that** the receiver unit (160) is furthermore provided with an opto-receiver (163) for selectively measuring at least a partial area of the infrared component of the measuring light and for generating a corresponding electrical IR measuring signal.

5. Device according to claim 4,
**characterized in**
**that** the receiver unit (160) has a concave reflection diffraction grating (161) as a dispersive element and a photoelectric transducer line (162) disposed in the region of the interference maxima of the first order generated by such reflection diffraction grating and that the opto-receiver (163) for the IR component of the measuring light is disposed in the region of the interference maximum of the zeroth order of the diffraction grating (161).

6. Device according to one of claims 1-5,
**characterized in**
**that** the scanning device (100) comprises a measuring carriage (W) which can be moved in said second direction (x) over the measuring table (T), on which the measuring heads (120) are mounted and which also carries the light source (130), the light distribution unit (140), and the receiver unit (160).

7. Device according to one of claims 1-6,
**characterized in**
**that** the light distribution unit (140) connects the light source (130) with the receiver unit (160) at least once per cycle and that the control unit (S) or processing unit (C) analyzes the measuring signals generated by receiver unit (160) to calibrate the scanning unit (100).

8. Device according to one of claims 1-7,
**characterized in**
**that** an additional light sensor (153) is provided, that the light distribution unit (140) connects the light source (130) with the additional light sensor (153) at least once per cycle and that the control unit (S) or the processing unit (C) analyzes the measuring signals generated by the additional light sensor (153) to synchronize the scanner (100).

9. Device according to one of claims 1-8,
**characterized in**
**that** the light distribution unit (140) has a measuring position for the dark calibration of the measuring system.

## Revendications

1. Dispositif de balayage pour la mesure point d'image photoélectrique d'un objet à mesurer, en particulier d'une feuille imprimée, ayant de préférence été imprimée en plusieurs couleurs, avec une table de mesure (T), sur laquelle l'objet de mesure (B) devant être mesuré est susceptible d'être fixé,
avec un dispositif de balayage (100) déplaçable sur la surface de la table de mesure (T), qui balaie de façon photoélectrique chaque fois au moins un élément d'image (P) de l'objet à mesurer (B),
le dispositif de balayage (100) comprenant une pluralité de têtes de mesure (120) pour mesurer, point d'image par point d'image, une pluralité correspondante d'éléments d'image (P) de l'objet à mesurer (B), qui se trouvent les uns derrière les autres pratiquement en ligne dans une première direction (y),
et les têtes de mesure (120) étant dispoeées de façon déplaçable conjointement dans une deuxième direction (x) s'étendant sensiblement, perpendiculairement par rapport à cette première direction (y), de manière que l'object à mesurer (B) puisse être exploré en une pluralité de premières pistes de balayage (Sₐ) parallèles à la deuxième direction (x),
avec un dispositif d'entraînement (A) déplaçant le dispositif de balayage (100) sur la table de mesure (T), de manière à pouvoir détecter l'ensemble des éléments d'image (P) de l'objet à mesurer (B),
avec un dispositif de commande (S) pour le dispositif de balayage (100) et le dispositif d'entraînement (A),
et avec un dispositif de traitement (C) pour traiter et évaluer les signaux de mesure produits par le dispositif de balayage (100), à partir des éléments d'image (100), issue du balayage, de l'objet à mesurer (B),
**caractérisé en ce que** les têtes de mesure (120) présentent chacune un conducteur de lumière (121) amenant une lumière d'éclairage à a l'objet à mesurer (B) et un conducteur de lumière (122) évacuant la lumière de mesure rerayonnée par l'objet à mesurer (B), et **en ce que** le dispositif de balayage (100) présente une source de lumière (130), une unité de réception (160) et un distributeur de lumière (140), qui relie chaque fois le conducteur de lumière (121) amenant la lumière et le conducteur de lumière (122) évacuant la lumière des différentes têtes de mesure (120) cycliquement, séquentiellement, à la source de lumière (130) et à l'unité réceptrice (160).

2. Dispositif selon la revendication 1, **caractérisé en ce que** le distributeur de lumière (140) présente deux ponts de guides de lumière (142, 143) tournant de façon synchrone, chacun des ponts reliant optiquement un conducteur de lumière (144, 145) disposé axialement, de façon cyclique et séquentielle, à une pluralité de conducteurs de lumière (121, 122) disposés périphériquement.

3. Dispositif selon l'une des revendications 1 à 2, **caractérisé en ce que** l'unité réceptrice (160) est réalisée sous la forme de photomètre spectral, qui décompose la lumière de mesure, lui étant amenée par les têtes de mesure (120), depuis les éléments d'image (P) balayés de l'objet à mesurer (B), en un nombre prédéterminé de zones spectrales à bande étroite, dans la plage du spectre visible, et la convertit en des signaux de mesure spectrale électrique correspondants.

4. Dispositif selon la revendication 2, **caractérisé en ce que** l'unité réceptrice (160) présente en plus un photorécepteur (163) pour détecter sélectivement au moins une zone partielle de la partie à infrarouge de la lumière de mesure et pour produire un signal de mesure IR électrique correspondant.

5. Dispositif selon la revendication 4, **caractérisé en ce que** l'unité réceptrice (160) présente une grille de réflexion-diffraction (161) concave, réalisée sous forme d'éléments dispersifs, ainsi qu'une ligne de convertisseur (162) photoélectriques, disposée dans la zone des maxima d'interférence de premier ordre générés par cette grille, et **en ce que** le photorécepteur (163), prévu pour la partie IR de la lumière de mesure, est disposé dans la zone du maximum d'interférence d'ordre zéro de la grille de difraction (161).

6. Dispositif selon l'une des revendications 1 à 5, **caractérisé en ce que** le dispositif de balayage (100) comprend un chariot de mesure (W) déplaçable dans la deuxième direction (x) citée sur la table de mesure (T), chariot sur lequel sont montées les têtes de mesure (120) et qui porte également la source de lumière (130), le distributeur de lumière (140) et l'unité réceptrice (160).

7. Dispositif salon l'une des revendications 1 à 6, **caractérisé en ce que** le distributeur de lumière (140) relie, à chaque cycle de rotation, au moins à une reprise, la source de lumière (130) directement à l'unité réceptrice (160), et **en ce que** le dispositif de commande (S) ou le dispositif de traitement (C) évalue les signaux de mesure produits alors par l'unité réceptrice (160), dans le but d'étalonner le dispositif de balayage (100).

8. Dispositif selon l'une des revendications 1 à 7, **caractérisé en ce qu'**un photo-capteur (153) supplémentaire est prévu, **en ce que** le distributeur de lumière (140) relie, à chaque cycle de rotation, au moins à une reprise, la source de lumière (130) au photo-capteur (153) supplémentaire, et **en ce que** le dispositif de commande (S) ou le dispositif de traitement (C) évalue les signaux de mesure produits par le photo-capteur (153) supplémentaire, dans le but de synchroniser le dispositif de balayage (100).

9. Dispositif selon l'une des revendications 1 à 8, **caractérisé en ce que** le distributeur de lumière (140) présente une position de mesure pour l'étalonnage sombre ou par suppressions du système de mesure.
